# EUROPEAN PATENT SPECIFICATION

(11) **EP 2 082 577 B1**
(45) Date of publication and mention of the grant of the patent: **20.06.2012**
(21) Application number: 07867548.5
(22) Date of filing: 19.11.2007
(51) Int. Cl.: H04N 5/275, H04N 9/75

(54) **METHOD, SYSTEM AND COMPUTER PROGRAM PRODUCT FOR VIDEO INSERTION**
VERFAHREN, SYSTEM UND COMPUTERPROGRAMMPRODUKT ZUR VIDEOEINFÜGUNG
PROCÉDÉ, SYSTÈME, ET PRODUIT PROGRAMME D'ORDINATEUR, POUR UNE INSERTION VIDÉO

(30) Priority: 17.11.2006 US 561052
(43) Date of publication of application: 29.07.2009
(73) Proprietor: Disney Enterprises, Inc., Burbank, CA 91521 (US)
(72) Inventor: WALSH, Peter M., Bristol, CT 06010 (US); BAILEY, Anthony John, Bristol, CT 06010 (US); CASAMONA, David Louis, Bristol, CT 06010 (US)
(74) Representative: Olesen, Kaj
(86) International application number: PCT/US2007/024228
(87) International publication number: WO 2008/066733

(56) References cited:
- EP-A1- 1 499 117
- GB-A- 2 336 056
- US-A- 5 313 275
- US-A1- 2005 212 820
- US-A1- 2006 055 707
- US-B1- 6 229 550
- US-B1- 6 271 890

## Description

### BACKGROUND

### Field of the Invention

Embodiments of the invention relate generally to video insertion, and in particular to video insertion that facilitates defining color spaces for video insertion.

### Discussion of the Related Art

Commercially available chromakeyers allow the user to select a single range of hue values, which is used to create a key. Typically the location and width of this hue range can be specified. Furthermore, the upper and lower limits of the range can be softened with a gradual transition between "in-range" and "out-of-range." In some cases, a lower limit on the amount of saturation for keying can also be specified. As an alternative, it is possible to specify a luminance region instead of a hue region for keying which makes the key a function of the luminance instead of being color dependent.
US 6 229 550 B1 describes blending of graphic and video by controlling the relative transparency of corresponding pixels through use of blending coefficients. The value of a blending coefficient is based on the luminance and chrominance characteristics of a neighborhood of pixels in the video. Inclusions and exclusions are set up which define how the neighborhood of pixels is used to create or change a particular blending characteristic.
GB 2 336 056 A discloses a chroma-keying system in which one or more sub-regions within a softness region surrounding a matte tolerance region are selected.

These chromakeyers allow video insertion (keying) when the region for which the key is to be generated has reasonably uniform coloration. There are limitations when applying these chromakeyers in natural, uncontrolled or outdoor environments or when there is a complicated image having many different colored features present. Examples of these situations include the broadcasting of sporting events such as football, baseball or basketball. There can, for example, be natural grass having non-uniform appearance, markings on the field, various colors of player uniforms and widely varying lighting conditions. In many such cases, the use of a single color (hue) range to determine where to generate the key is inadequate for achieving the desired effect. This can include false keying on features that should not be keyed or holes in the keying where the key will not be generated in a region for which keying is desired.

The current technology generates a key, which is used to combine two video sources (foreground and background) based on the signal present in the background video source. The key generated by the chromakeyer is itself a video signal generated based on the content of the background image. Specifically, each location in the key image (pixel) is, for every frame of video, determined from the hue, and possibly the saturation, in the background video. Alternatively, it may be determined from the luminance values in the background video. The values in the frames of the key control whether the keyer outputs the foreground, the background or a blended combination of the two.

For example, a blue screen can be used as a background in a studio so that a chromakeyer can replace all pixels within a defined range of the blue background color with a secondary (foreground) video source, also known as the fill. The output image will include a person standing in front of the blue screen while replacing the regions in which the blue screen is visible with the foreground video signal (for example, an animated weather map).

Using an example of an advertisement to be positioned on a brick wall behind the batters box in a baseball game broadcast, the brick wall is multiple colors of reds, browns, and grays. Thus, the range of hue selected would need to be a series of reds, browns, and grays, so as to include the colors that exist on the brick wall. The area for insertion would be clearly defined as the location for the advertisement. However, difficulties arise for two reasons. First, because of the multiple hues necessary for selection, it is difficult with current technologies to apply video insertion across multiple hues. There would need to be a selection of the dominant hue (in this case, red), and an imperfect video insertion image would result, still showing the gray lines of cement in the brick wall. The other option to address this issue would be to apply a single hue blanket over the area for video insertion, thus establishing the need for only one hue range to be necessary for the video insertion to occur.

The other difficulty occurs when the baseball players have similar colored jerseys to the colors in the brick wall, and hence is wearing similar colors defined in the hue range for video insertion. In this case, if the player were to move into the area of video insertion, the advertisement may appear distorted and appear somewhat on the player's jersey.

In summary, the concept of the current technology is to pick a single defined range of a hue within a set region to key and fill, without allowing for differentiation of hue, saturation or luminance. This limits the user's ability to effectively set regions for keying.

### SUMMARY OF THE INVENTION

Embodiments of the invention are defined by the appended claims.

An aspect of the invention includes a method for video insertion including presenting a user with an image; allowing the user to define one or more inclusion regions of interest by selecting one or more portions in the image; allowing the user to define one or more exclusion regions of interest by selecting one or more portions in the image; expanding inclusion color values in a color space to define an inclusion color region, the inclusion color values corresponding to colors in the inclusion region of interest; expanding exclusion color values in a color space to define an exclusion color region, the exclusion color values corresponding to colors in the exclusion region of interest; assigning each color in the color space a key value in response to the inclusion color region and the exclusion color region; receiving background video and foreground; merging the background video and the foreground in response to the key value corresponding to the background video color.

### BRIEF DESCRIPTION OF THE DRAWINGS

Further features, aspects and advantages of the apparatus and methods of the embodiments of the invention will become better understood with regard to the following description, appended claims, and accompanying drawings.

Figure 1 is block diagram of an exemplary chromakeying system.

Figure 2 illustrates an exemplary key look-up table.

Figure 3 is a flowchart of an exemplary process for assigning key values.

Figure 4 is a flowchart of an alternate exemplary process for identifying key values.

Figure 5 illustrates an example of a user selecting colors from an image for keying.

Figure 6 illustrates colors selected in Figure 5 in a color space.

Figure 7 illustrates the color space after exemplary processing.

### DESCRIPTION OF EXEMPLARY EMBODIMENTS

Embodiments of the invention allow a user to create a key that can simultaneously include multiple, distinct regions of the color space as well as exclude a different set of multiple, distinct regions of the color space. The system supports defining regions of a color space. An example of one such color space is the HSL (hue, saturation, luminance) space, which is more intuitively meaningful to the user. Each of these regions is definable using a combination of hue, saturation and luminance values simultaneously. In addition, soft transitions are supported for each of these regions to avoid hard or artificial edges in the inserted video.

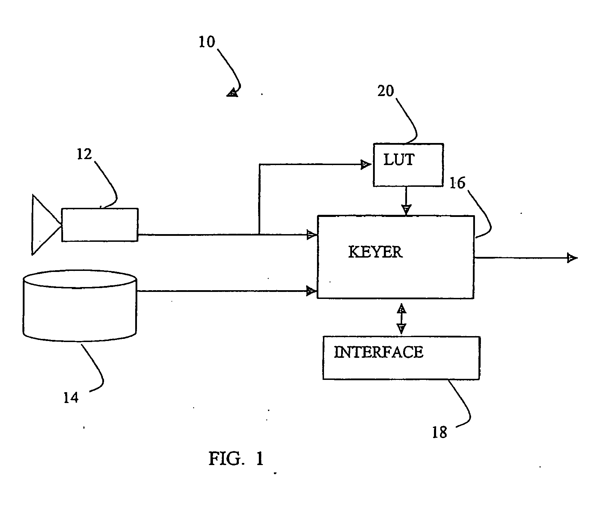

Figure 1 is a block diagram of an exemplary chromakeying system 10. The system 10 includes a source of digital background video 12 and a source of digital foreground 14. Embodiments of the invention are developed for use during a digital broadcast. However, it is also useable with an analog feed if necessary by first converting the analog video data to a digital representation. The keying occurs on a pixel-by-pixel basis between the background and the foreground. As used herein, background refers to the incoming broadcast video data (either real-time or delayed) and foreground refers to images or video placed on top of the background video. In exemplary embodiments, the background video source 12 is represented in the YUV color space. The background video may be in any number of alternate color space representations. For efficiency, the chromakeyer can operate directly on the YUV data without any color space conversion as broadcast video is in YUV format. The foreground 14 is the graphic or effect (fading, etc.) that will be mixed with the background to create a final effect. The foreground may be static images (graphics), dynamic (changing or moving) images, or video (for example from some other video source). The term foreground is intended to encompass these and other types of visual elements. The background video is comprised of pixels, each of which represents a value of hue, saturation and luminance (HSL). Alternatively, the background video may be represented in an RGB color space, a YUV color space or any of a number of alternate color spaces.

The keyer 16 is a system for replacing or mixing background video 12 with foreground 14 in response to a key value. The keyer may be a microprocessor-based system executing software applications stored on a computer medium to perform the functions described herein. A user interface 18 allows a user to define regions to perform insertion of foreground and regions to prohibit insertion of foreground.

The video insertion, or chromakeying, is a combination of the foreground 14 into the background 12. Both the background video 12 and the foreground 14 are fed into the keyer 16. Two video sources (foreground and background) are combined based on the key value provided from a look-up table 20. The key is itself a video signal in which every location (pixel) in every frame of video data has a distinct value. The values in the frames of the key control whether the keyer 16 outputs the foreground, the background or a blended combination of the two. For example, a key value of 1 indicates that the keyer 16 should completely replace the background pixel with the foreground pixel. A key value of 0 indicates that the keyer 16 should pass the background pixel unaltered. A key value of 0.5 indicates that the keyer 16 should blend the background pixel and foreground pixel 50/50.

In operation, the background video 12 and the foreground 14 are applied to the keyer 16. The background video 12 is also provided to the LUT 20 that outputs the key value in response to the foreground value. In embodiments of the invention, the LUT 20 is indexed by YUV values of the background video 12. It is understood that other color spaces may be used for the background video, and embodiments of the invention are not limited to YUV.

The keyer 16 combines the background video 12 and the foreground 14 in response to the key value as known in the art. As noted above, this may include completely replacing a background pixel with a foreground pixel, leaving the background pixel unmodified, or blending the values of the background pixel and the foreground pixel.

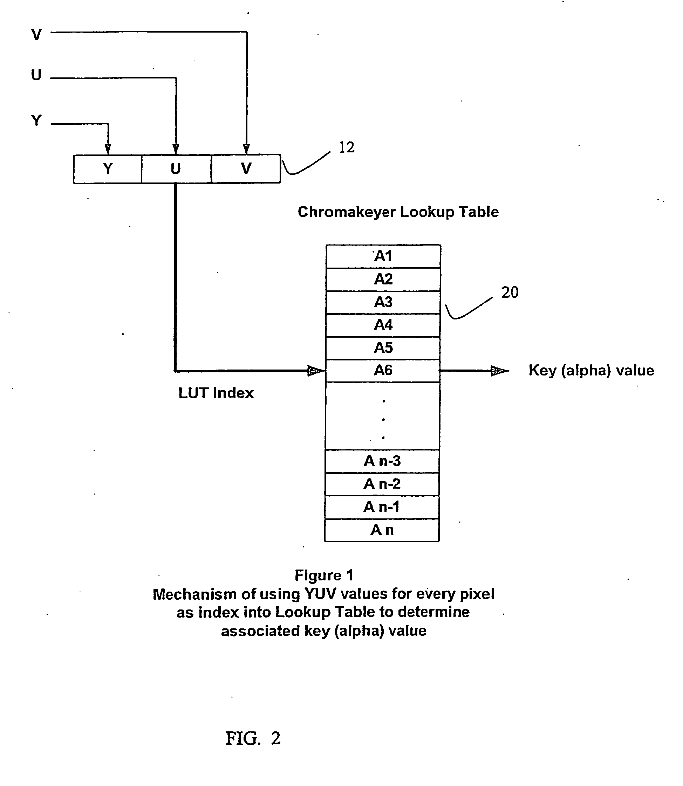

Figure 2 illustrates an exemplary key look-up table (LUT) 20. As shown in Figure 2, the background video 12 is received at the look-up table 20 in YUV format, as conventional television broadcast is provided in this format. It is understood that other formats may be used for the background video 12 and embodiments of the invention are not limited to YUV. The look-up table 20 is indexed by the YUV values to output the appropriate key for that YUV combination. The index is formed by the concatenation of the Y, U and V values which allows key value assignments to be made for every unique combination of Y, U and V values. This indexing by individual YUV values provides the user with unlimited control in assigning keys in a color space as each pixel YUV value is considered in the keying process.

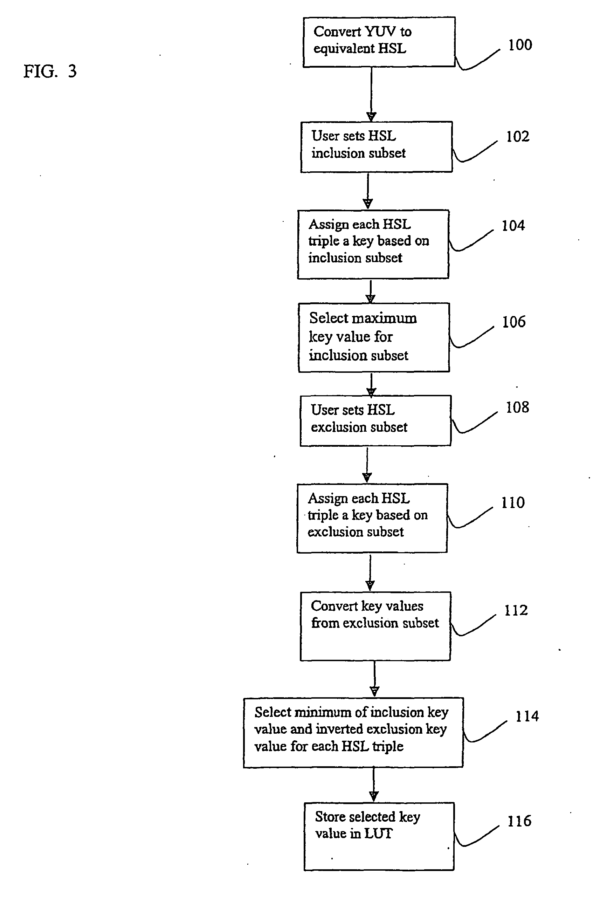

Figure 3 is a flowchart of an exemplary process for assigning key values. As described above, the index of a location in the LUT corresponds to a unique YUV triple of values. The content of the location is the key value being associated with the corresponding YUV value. The process may be implemented on the keyer 16, which may include a general purpose microprocessor executing a software application to perform the steps described herein.

The process for generating the LUT values from the multiple HSL regions begins at step 100 where for every possible YUV combination, the YUV values are converted to the equivalent values in the HSL color space. In this example, the user selects inclusion subsets and exclusion subsets in the HSL color space. In alternate embodiments, the selected HSL values can be converted into equivalent YUV values. It is understood that color spaces other than HSL and YUV may be used in embodiments of the invention and conversions between a variety of color spaces are contemplated in embodiments of the invention.

At step 102, the user defines an inclusion subset in the HSL color space. This may be performed by the user selecting colored regions from a color palette. The inclusion subset defines what colors in the HSL space are to be replaced by the foreground 14. For example, the user may select a region of blue tones, indicating that all these colors should be replaced by the foreground. This may be done repeatedly for multiple inclusion subsets.

Once the user has defined the inclusion subsets in the HSL color space, the system determines, for each HSL triple, whether that HSL triple is "in subset," "out of subset," or in a "transition" region (and to what degree) for each of the HSL inclusion subsets, and determines an associated key value at step 104. For example, an HSL triple within the user set inclusion subset may be assigned a key value 1, indicating that this HSL triple is to be replaced with foreground. An HSL triple outside the inclusion subset may be assigned a value 0, indicating that this HSL value is not to be replaced with foreground. A transition HSL triple (i.e., on the border between inclusion and exclusion) may be assigned an intermediate value (e.g., 0.5) to indicate a blending of the background 12 and the foreground 14 for this HSL value. At step 106, the maximum of the key values for all of these inclusion subsets is determined (i.e., a key is created if any of the inclusion subsets is satisfied).

At step 108, the user defines an exclusion subset in the HSL color space. This may be performed by the user selecting colored regions from a color palette. The exclusion subset defines what colors in the HSL space are not to be replaced by the foreground 14. For example, the user may select a region of red tones, indicating that all these colors should never be replaced by the foreground.

At step 110, the system determines, for each HSL triple, whether that HSL triple is "in subset," "out of subset," or in a "transition" region (and to what degree) for each of the HSL exclusion subsets, and determines an associated key value. For example, an HSL triple within the user set exclusion subset may be assigned a key value 1, indicating that this HSL triple is not to replaced with foreground. An HSL triple outside the exclusion subset may be assigned a value 0, indicating that this HSL value is permitted to be replaced with foreground. A transition HSL triple (i.e., on the border between inclusion and exclusion) may be assigned an intermediate value (e.g., 0.5) to indicate a blending of the background 12 and the foreground 14 for this HSL value. At step 112, the key values from step 110 are converted in order to represent exclusion. A converted value is determined for key values in the range of zero to one, for example, by subtracting the key value from one, thereby mapping zero to one and one to zero and in between values accordingly.

At step 114, the minimum of the inclusion key values from step 104 and each of the inverted exclusion key values from step 112 is determined for each of the exclusion subsets. This minimum value is used for the corresponding HSL triple. The effect of this is that exclusion will occur if any of the exclusion regions is satisfied and will therefore override the inclusion key. At step 116, the selected final key values are stored in the associated location in the (LUT) 20.

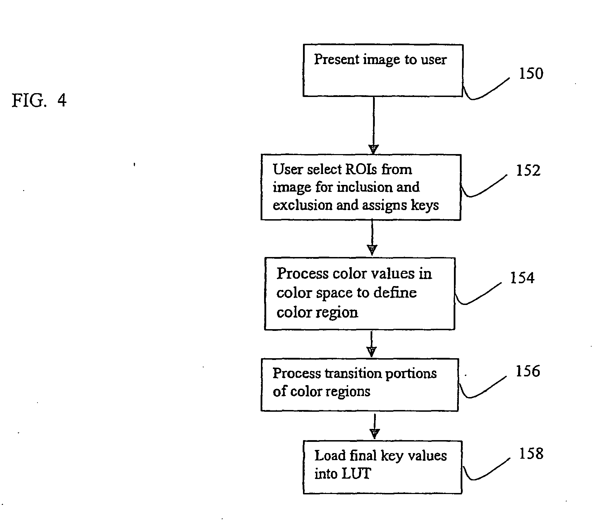

Figure 4 is a flowchart of an alternate exemplary process for identifying key values. In alternate embodiments, the LUT 20 can be generated by selecting regions of interest (ROI) within one or more images and specifying that the colors present in each region are representative of those that are to be either included or excluded by the chromakeying process. Thus, the LUT 20 is taught by example using this learning process. This eliminates the need for the user to explicitly specify regions in the color space.

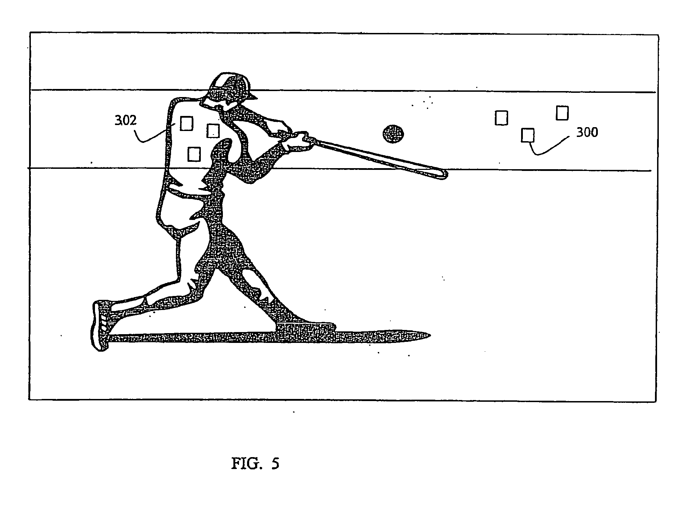

The process begins at step 150 where a user is presented with an image of a scene that is to be processed by keyer 16. Figure 5 depicts an exemplary image that the user may interact with to establish key values for the LUT 20. At step 152, the user selects regions of interest (ROI) in the image for inclusion and exclusion from keying. For example, the user may use a mouse or other input device to select ROIs in the image. As shown in the image in Figure 5, the user has selected regions 300 (e.g., home run fence) as the inclusion subset in the keying and region 302 (e.g., player's jersey) as the exclusion subset in the keying. Each ROI within the image can be defined by specifying the shape and location of the region by any number of means that may include rectangular regions, polygons, or other irregularly shaped regions. Furthermore, for each ROI, the user assigns a key (e.g., 0, 1, 0.5) which indicates the degree to which colors within this ROI should be included, excluded, blended (i.e., specifying the degree of transparency).

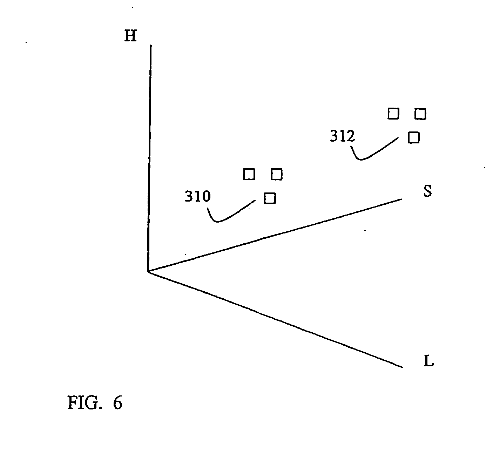

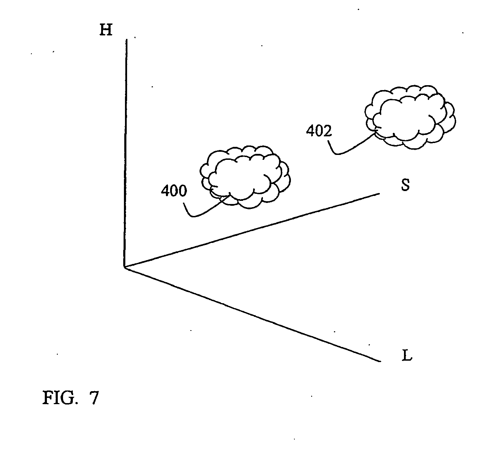

Once the user has selected the ROI (both for inclusion and exclusion in keying), flow proceeds to step 154 where the color values are processed in color space to define color regions for inclusion or exclusion from keying. It is noted that the color regions created from the color values need not be contiguous regions, but rather may represent discontinuous spaces in the color space. Figure 6 illustrates the color values 310 and 312 corresponding to ROIs 300 and 302 from the image in Figure 5, in an HSL color space, for example. These color values may be processed in the color space to define color regions in the color space. The colors values in the color regions are then assigned a key value. For example, Figure 7 illustrates a color region 400 and a color region 402, generated by processing the color values 310 and 312 from ROIs 300 and 302, respectively. As shown in Figure 7, the color values 310 and 312 have been expanded to include neighboring color values so that the user need not be concerned with selecting every single color of interest from the image in Figure 5. The processing of step 154 expands the color values defined by the user.

The color values may be processed using a variety of techniques at step 154. Advanced techniques such as region growing based on pixel similarity can be applied. The color values of all pixels in the image that lie within each specified ROI are processed to develop the key values. Therefore, whatever technique is used for specifying each ROI 300 and 302, it results in a subset of the image colors being defined. The defined pixels can, for example, be represented by a list of pixel coordinates, which in turn can be used to generate a list of color values.

The color values of pixels within each ROI are a sampling or example of the colors to be specified. They are representative but not a complete detailing of the color values which are being specified for inclusion/exclusion. Further processing is used to achieve the intended full description of the color region. Each pixel within a ROI will have a certain color value that can be represented in any number of alternate color spaces, e.g., RGB, HSL or YUV. The set of all pixel values within a ROI provide a sampling of the region(s) of the color space that the ROI represents. Variations from the sampled values will occur from frame to frame in a live video stream. Furthermore, the ROI is a spatial sample of a region, such as a playing field, which is to be chromakeyed. The values of pixels in other parts of the field will vary from those in the ROI sample. For these reasons, additional processing is used to generate the color region.

Typically slight variations in pixel values also are included in the representation. Furthermore, as the degree of the variations from the original pixel values increases, the degree of their inclusion should diminish. This amounts to a softening of the boundaries of the defined subsets of the color space. There can also be situations in which a large number of the pixels contained in a ROI are representative of the intended specification but where there are a small number of pixels also contained in the ROI that are not representative of the intended region. In this case, processing to remove the unintended color values is required. This situation is most common with natural scenes such as sporting event broadcasts.

The pixel color values contained in a selected ROIs 300 and 302 can be though of as a subset of the LUT 20 used by the chromakeyer. The processing of step 154 generates expanded color regions 400 and 402. Typically, the processing techniques are combined by applying them in certain sequences. This is done to obtain various desired end results. Various processing techniques may be used, and typical applications of these processing steps will be discussed.

The processing in step 154 operates on three-dimensional data. The processes can be defined to work in any three-dimensional color space, e.g., RGB, HSL, YUV. Whatever color space is used for capturing an image, it can be converted into another color space, if desired, for application of any of the following operations.

The techniques can be divided into two categories; non-linear morphology and linear convolution. The non-linear morphology includes erosion and dilation operators. The erosion and dilation operators can, in turn, be combined to create opening and closing operators. The three dimensional shape of the morphology operators is defined in terms of the axes of the color space.

The linear techniques include a convolution operator. The selection of the shape of the three dimensional convolution kernel is used to obtain various desired outcomes. Typically, a smoothing kernel is used which is characterized by its width along each axis in the color space and the width of the transition region in the direction of each axis of the color space. Exemplary morphology and convolution operators are described herein. These are only examples and not an exhaustive list of all possible operator definitions. Embodiments of the invention are not limited to the operators listed below.

Dilation is an operation where a value is replaced by the maximum value throughout a defined neighborhood. The neighborhood has a distinct extent or width in each direction of the color space being used. For example, if the color space being used is hue, saturation, luminance (HSL), a dilation operator might have widths in H, S and L directions of 0, 50, and 50, respectively. This would have the effect, for a given hue, of widening the ranges of saturation and luminance that are to be included in the subset of the color space. Another example, using the red, green, blue (RGB) color space, a dilation operator might have widths in R, G, and B of 20, 20, and 20, respectively. This has the effect of filling in uniformly around each sampled color value.

Erosion is the same as dilation except the minimum value throughout the neighborhood is used instead of the maximum value. The application of erosion operators has the effect of shrinking or tightening up the subset of the color space being represented.

Linear convolution is an operation where a value is replaced by the weighted summation of values throughout a defined neighborhood. The weightings for each of the neighboring elements are contained in a convolution kernel. A typical example might be a kernel having widths in H, S, and L of 10, 50 and 100 respectively. This would provide weighted inclusion of hue values within 10 units of distance, saturation values within 50 units of distance and luminance values within 100 units of distance. In addition to the widths in each direction, there would typically be transitional regions defined in which the kernel tapers off.

Once the color values have been processed to define the color regions, the transition portions of the color regions are processed at step 156. This step involves processing the edges of color regions 400 and 402 so that there is a smooth transition between the color region and the remainder of the color space. An averaging filter may be used to adjust the key values at the border of the color regions 400 and 402.

The processing techniques used in steps 154 and 156 have default parameters (e.g., width of filters, values in filters). Alternatively, the user may specify which processing steps are to be applied to the color values associated with the color regions, and any associated parameters.

Once the color regions in the color space have been processed, the key values are loaded into the LUT as shown in step 158. Optionally, conversions between color space representations can be performed at various points in the process.

The ability to select ROIs and the level of keying (inclusion, exclusion or partial) from a test image reduces the burden on the user in setting the key values in the LUT 20. Attempting to define keying regions based on color alone becomes complicated in situations where there are other objects within the same space where the graphic must be inserted. If the colors are similar, the video insertion can create graphical distortions because there is an inability to differentiate the colors. For example, the difference in color between red baseball jerseys a brick wall behind the batters box is subtle when attempting to use the video insertion to include the virtual advertisement on the brick wall behind the batters box. Embodiments of the invention allow a user to define the jersey and the brick wall as separate ROIs for exclusion and inclusion, respectively.

Through the process in Figure 4, a user can select multiple regions of hue, saturation and luminance (HSL) to be keyed. This allows the user to define and select an unlimited number of regions to be logically combined as inclusions and/or exclusions to achieve a final effect. The user may select the degree to which the edges are transitioned within each of the regions, thus allowing for soft transitions between central and outer HSL. The system supports uniquely mapping every possible YUV value (color and intensity of video) to a definable key value for use in keying one video source onto another video source. This provides a conversion from the specified HSL regions to the equivalent YUV representation.

As described above, the embodiments of the invention may be embodied in the form of computer-implemented processes and apparatuses for practicing those processes. Embodiments of the invention may also be embodied in the form of computer program code containing instructions embodied in tangible media, such as system memory, CD-ROMs, hard drives, or any other computer-readable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic events.

While the invention has been particularly shown and described with respect to illustrative and preformed embodiments thereof, it will be understood by those skilled in the art that the foregoing and other changes in form and details may be made therein without departing from scope of the invention which should be limited only by the scope of the appended claims.

## Claims

1. A method for video insertion comprising:
presenting a user with an image;
the user defining one or more inclusion regions of interest (300) by selecting one or more portions in the image;
the user defining one or more exclusion regions of interest (302) by selecting one or more portions in the image;
expanding inclusion color values (310) in a color space to define an inclusion color region (400), the inclusion color values (310) corresponding to colors in the inclusion region of interest (300);
expanding exclusion color values (312) in a color space to define an exclusion color region (402), the exclusion color values (312) corresponding to colors in the exclusion region of interest (302);
assigning each color in the color space a key value in response to the inclusion color region (400) and the exclusion color region (402);
receiving background video (12) and foreground (14);
merging the background video (12) and the foreground (14) in response to the key value corresponding to the background video color,
**characterized in that**
at least one of said expanding inclusion color values (310, 312) and said expanding exclusion color values (310, 312) include performing non-linear morphology or linear convolution on the color values in the color space.

2. The method of claim 1 wherein:
expanding inclusion color values (310) in the color space includes performing dilation on the inclusion color values (310) in the color space.

3. The method of claim 2 wherein:
expanding inclusion color values (310) in the color space includes performing dilation followed by erosion on the inclusion color values (310) in the color space.

4. The method of claim 1 wherein:
assigning each color in the color space the key value in response to the inclusion color region (400) includes assigning transition key values to color values (310) on the edge of the inclusion color region (400).

5. The method of claim 1 wherein:
expanding inclusion color values (310) in the color space includes applying a convolution operator on the inclusion color values (310) in the color space.

6. A system (10) for video insertion comprising:
a user interface (18) presenting a user with an image and allowing the user to define one or more inclusion regions of interest (300) by selecting one or more portions in the image;
the user interface (18) allowing the user to define one or more exclusion regions of interest (302) by selecting one or more portions in the image;
a source of background video (12);
a source of foreground (14);
a look-up table storing a key value for each color in a color space;
a keyer (16) for merging the background video (12) and the foreground (14) in response to the key value in the look up table (20) corresponding to the background video color,
**characterized in that**
the key value are derived by expanding inclusion color values (310) in the color space to define an inclusion color region (400), the inclusion color values (310) corresponding to colors in the inclusion region of interest (300) and expanding exclusion color values (312) in a color space to define an exclusion color region (402), the exclusion color values (312) corresponding to colors in the exclusion region of interest (302); and
at least one of said expanding of inclusion color values (310) and said expanding of exclusion color values (312) include performing non-linear morphology or linear convolution on the color values in the color space.

7. The system of claim 6 wherein:
expanding the inclusion color values (310) in the color space includes performing dilation on the inclusion color values (310) in the color space.

8. The system of claim 7 wherein:
expanding the inclusion color values (310) in the color space includes performing dilation followed by erosion on the inclusion color values (310) in the color space.

9. The system of claim 6 wherein:
the key values include transition key values for color values (310) on the edge of the inclusion color region (400).

10. The system of claim 6 wherein:
expanding inclusion color values (310) in the color space includes applying a convolution operator on the inclusion color values (310) in the color space.

## Patentansprüche

1. Verfahren für Videofreistellungen, Folgendes umfassend:
Anzeigen eines Bildes für einen Benutzer;
Definieren eines oder mehrerer relevanter Einschlussbereiche (300) durch den Benutzer, indem dieser einen oder mehrere Teile im Bild auswählt;
Definieren eines oder mehrerer relevanter Ausschlussbereiche (302) durch den Benutzer, indem dieser einen oder mehrere Teile im Bild auswählt;
Expandieren von Einschlussfarbwerten (310) in einem Farbraum zur Definition eines Einschlussfarbbereichs (400), wobei die Einschlussfarbwerte (310) Farben im relevanten Einschlussbereich (300) entsprechen;
Expandieren von Ausschlussfarbwerten (312) in einem Farbraum zur Definition eines Ausschlussfarbbereichs (402), wobei die Ausschlussfarbwerte (312) Farben im relevanten Ausschlussbereich (302) entsprechen;
Zuordnen eines Schlüsselwerts zu jeder Farbe im Farbraum in Abhängigkeit vom Einschlussfarbbereich (400) und vom Ausschlussfarbbereich (402);
Empfangen eines Hintergrundvideos (12) und eines Vordergrunds (14);
Mischen des Hintergrundvideos (12) und des Vordergrunds (14) in Abhängigkeit von dem Schlüsselwert, der der Hintergrundvideofarbe entspricht,
**dadurch gekennzeichnet, dass**
das Expandieren von Einschlussfarbwerten (310, 312) und/oder das Expandieren von Ausschlussfarbwerten (310, 312) das Ausführen eines nicht-linearen morphologischen Operators oder eines linearen Faltungsoperators auf den Farbwerten im Farbraum umfasst.

2. Verfahren nach Anspruch 1, wobei:
das Expandieren von Einschlussfarbwerten (310) im Farbraum das Ausführen einer Dilation auf den Einschlussfarbwerten (310) im Farbraum umfasst.

3. Verfahren nach Anspruch 2, wobei:
das Expandieren von Einschlussfarbwerten (310) im Farbraum das Ausführen einer Dilation gefolgt von einer Erosion auf den Einschlussfarbwerten (310) im Farbraum umfasst.

4. Verfahren nach Anspruch 1, wobei:
das Zuordnen eines Schlüsselwerts zu jeder Farbe im Farbraum in Abhängigkeit vom Einschlussfarbbereich (400) das Zuordnen von Übergangs-Schlüsselwerten zu Farbwerten (310) auf dem Rand des Einschlussfarbbereichs (400) umfasst.

5. Verfahren nach Anspruch 1, wobei:
das Expandieren von Einschlussfarbwerten (310) im Farbraum das Anwenden eines Faltungsoperators auf die Einschlussfarbwerte (310) im Farbraum umfasst.

6. System (10) für Videofreistellungen, Folgendes umfassend:
eine Benutzerschnittstelle (18), die dem Benutzer ein Bild anzeigt und die es dem Benutzer gestattet, einen oder mehrere relevante Einschlussbereiche (300) zu definieren, indem er einen oder mehrere Teile im Bild auswählt;
wobei die Benutzerschnittstelle (18) es dem Benutzer gestattet, einen oder mehrere relevante Ausschlussbereiche (302) zu definieren, indem er einen oder mehrere Teile im Bild auswählt;
eine Quelle für ein Hintergrundvideo (12);
eine Quelle für einen Vordergrund (14);
eine Lookup-Tabelle, die für jede Farbe in einem Farbraum einen Schlüsselwert speichert;
eine Freistellvorrichtung (16) zum Mischen des Hintergrundvideos (12) und des Vordergrunds (14) in Abhängigkeit von dem Schlüsselwert aus der Lookup-Tabelle (20), der der Hintergrundvideofarbe entspricht,
**dadurch gekennzeichnet, dass**
die Schlüsselwerte durch Folgendes erhalten werden: das Expandieren von Einschlussfarbwerten (310) im Farbraum zur Definition eines Einschlussfarbbereichs (400), wobei die Einschlussfarbwerte (310) Farben im relevanten Einschlussbereich (300) entsprechen, und das Expandieren von Ausschlussfarbwerten (312) in einem Farbraum zur Definition eines Ausschlussfarbbereichs (402), wobei die Ausschlussfarbwerte (312) Farben im relevanten Ausschlussbereich (302) entsprechen; und
wobei das Expandieren von Einschlussfarbwerten (310) und/oder das Expandieren von Ausschlussfarbwerten (312) das Ausführen eines nicht-linearen morphologischen Operators oder eines linearen Faltungsoperators auf den Farbwerten im Farbraum umfasst.

7. System nach Anspruch 6, wobei:
das Expandieren der Einschlussfarbwerte (310) im Farbraum das Ausführen einer Dilation auf den Einschlussfarbwerten (310) im Farbraum umfasst.

8. System nach Anspruch 7, wobei:
das Expandieren der Einschlussfarbwerte (310) im Farbraum das Ausführen einer Dilation gefolgt von einer Erosion auf den Einschlussfarbwerten (310) im Farbraum umfasst.

9. System nach Anspruch 6, wobei:
die Schlüsselwerte Übergangs-Schlüsselwerte zu Farbwerten (310) auf dem Rand des Einschlussfarbbereichs (400) umfassen.

10. System nach Anspruch 6, wobei:
das Expandieren von Einschlussfarbwerten (310) im Farbraum das Anwenden eines Faltungsoperators auf die Einschlussfarbwerte (310) im Farbraum umfasst.

## Revendications

1. Procédé d'insertion vidéo, consistant à :
- présenter une image à un utilisateur ;
- l'utilisateur définissant une ou plusieurs régions d'inclusion d'intérêt (300) en choisissant une ou plusieurs parties sur l'image ;
- l'utilisateur définissant une ou plusieurs régions d'exclusion d'intérêt (302) en choisissant une ou plusieurs parties sur l'image ;
- étendre les valeurs chromatiques d'inclusion (310) dans un espace chromatique pour définir une région chromatique d'inclusion (400), les valeurs chromatiques d'inclusion (310) correspondant aux couleurs dans la région d'inclusion d'intérêt (300) ;
- étendre les valeurs chromatiques d'exclusion (312) dans un espace chromatique pour définir une région chromatique d'exclusion (402), les valeurs chromatiques d'exclusion (312) correspondant aux couleurs dans la région d'exclusion d'intérêt (302) ;
- attribuer à chaque couleur dans l'espace chromatique une valeur clé en réponse à la région chromatique d'inclusion (400) et à la région chromatique d'exclusion (402) ;
- recevoir une vidéo d'arrière-plan (12) et un premier plan (14) ;
- fusionner la vidéo d'arrière-plan (12) et le premier plan (14) en réponse à la valeur clé correspondant à la couleur vidéo d'arrière-plan,
- **caractérisé en ce que**
- au moins une de ladite extension des valeurs chromatiques d'inclusion (310, 312) et de ladite extension des valeurs chromatiques d'exclusion (310, 312) consiste à réaliser une morphologie non linéaire ou une convolution linéaire sur les valeurs chromatiques dans l'espace chromatique.

2. Procédé selon la revendication 1, dans lequel :
- l'extension des valeurs chromatiques d'inclusion (310) dans l'espace chromatique consiste à réaliser une dilatation sur les valeurs chromatiques d'inclusion (310) dans l'espace chromatique.

3. Procédé selon la revendication 2, dans lequel :
- l'extension des valeurs chromatiques d'inclusion (310) dans l'espace chromatique consiste à réaliser une dilatation suivie par une érosion sur les valeurs chromatiques d'inclusion (310) dans l'espace chromatique.

4. Procédé selon la revendication 1, dans lequel :
- l'attribution à chaque couleur dans l'espace chromatique de la valeur clé en réponse à la région chromatique d'inclusion (400) consiste à attribuer des valeurs clés de transition aux valeurs chromatiques (310) sur le bord de la région chromatique d'inclusion (400).

5. Procédé selon la revendication 1, dans lequel :
- l'extension des valeurs chromatiques d'inclusion (310) dans l'espace chromatique consiste à appliquer un opérateur de convolution sur les valeurs chromatiques d'inclusion (310) dans l'espace chromatique.

6. Système (10) d'insertion vidéo comprenant :
- une interface utilisateur (18) présentant à un utilisateur une image et permettant à l'utilisateur de définir une ou plusieurs régions d'inclusion d'intérêt (300) en choisissant une ou plusieurs parties dans l'image ;
- l'interface utilisateur (18) permettant à l'utilisateur de définir une ou plusieurs régions d'exclusion d'intérêt (302) en choisissant une ou plusieurs parties dans l'image ;
- une source de vidéo d'arrière-plan (12) ;
- une source de premier plan (14) ;
- une table de consultation stockant une valeur clé pour chaque couleur dans un espace chromatique ;
- un manipulateur (16) pour fusionner la vidéo d'arrière-plan (12) et le premier plan (14) en réponse à la valeur clé dans la table de consultation (20) correspondant à la couleur de la vidéo d'arrière-plan,
- **caractérisé en ce que**
- les valeurs clés sont dérivées en élargissant les valeurs chromatiques d'inclusion (310) dans l'espace chromatique pour définir une région chromatique d'inclusion (400), les valeurs chromatiques d'inclusion (310) correspondant aux couleurs dans la région d'inclusion d'intérêt (300) et en élargissant les valeurs chromatiques d'exclusion (312) dans un espace chromatique pour définir une région chromatique d'exclusion (402), les valeurs chromatiques d'exclusion (312) correspondant aux couleurs dans la région d'exclusion d'intérêt (302) ; et
- au moins une de ladite extension des valeurs chromatiques d'inclusion (310) et de ladite extension des valeurs chromatiques d'exclusion (312) consiste à réaliser une morphologie non linéaire ou une convolution linéaire sur les valeurs chromatiques dans l'espace chromatique.

7. Système selon la revendication 6, dans lequel :
- l'extension des valeurs chromatiques d'inclusion (310) dans l'espace chromatique consiste à réaliser une dilatation sur les valeurs chromatiques d'inclusion (310) dans l'espace chromatique.

8. Système selon la revendication 7, dans lequel
- l'extension des valeurs chromatiques d'inclusion (310) dans l'espace chromatique consiste à réaliser une dilatation suivie par une érosion des valeurs chromatiques d'inclusion (310) dans l'espace chromatique.

9. Système selon la revendication 6, dans lequel :
- les valeurs clés comprennent des valeurs clés de transition pour les valeurs chromatiques (310) sur le bord de la région chromatique d'inclusion (400).

10. Système selon la revendication 6, dans lequel :
- l'extension des valeurs chromatiques d'inclusion (310) dans l'espace chromatique consiste à appliquer un opérateur de convolution sur les valeurs chromatiques d'inclusion (310) dans l'espace chromatique.
